# FASCICULE DE BREVET EUROPEEN

(11) **EP 0 880 879 B1**
(45) Date de publication et mention de la délivrance du brevet: **14.04.2004**
(21) Numéro de dépôt: 98440100.0
(22) Date de dépôt: 19.05.1998
(51) Int. Cl.: A01D 34/66, A01B 63/102

(54) **Dispositif de manoeuvre d'un machine agricole**
Manövriervorrichtung für landwirtschaftliche Maschine
Agricultural machine manoeuvering device

(30) Priorité: 26.05.1997 FR 9706563
(43) Date de publication de la demande: 02.12.1998
(73) Titulaire: KUHN S.A., 67700 Saverne (FR)
(72) Inventeur: Neuerburg, Horst, 67700 Saverne (FR); Kieffer, Fernand, 67700 Saverne (FR)

(56) Documents cités:
- EP-A- 0 361 573
- EP-A- 0 679 327
- DE-A- 2 101 876
- FR-A- 2 394 236
- FR-A- 2 537 385
- GB-A- 851 711
- US-A- 3 955 344

## Description

La présente invention concerne une machine agricole selon le préambule de la revendication 1.

Il est connu une machine agricole, une faucheuse, comportant un mécanisme de coupe lié à une structure d'attelage au moyen d'une poutre porteuse. Cette poutre porteuse est liée d'une part à la partie centrale du mécanisme de coupe au moyen d'une première articulation d'axe longitudinal sensiblement horizontal et dirigé dans la direction d'avance et d'autre part à la structure d'attelage au moyen d'une deuxième articulation d'axe longitudinal sensiblement horizontal.

Un dispositif de levage comportant un vérin hydraulique permet de pivoter le mécanisme de coupe et la poutre porteuse vers le haut autour de la deuxième articulation. A cet effet, le vérin hydraulique est lié d'une part à la poutre porteuse et d'autre part à la structure d'attelage et est destiné à communiquer avec une centrale hydraulique d'un véhicule moteur auquel est destinée à être liée la faucheuse.

Cette faucheuse peut occuper différentes positions. Une position de travail dans laquelle le mécanisme de coupe repose au sol, une position de transport dans laquelle le mécanisme de coupe s'étend sensiblement verticalement vers le haut et une position intermédiaire dans laquelle le mécanisme de coupe s'étend quelque peu au-dessus du niveau du sol.

Pour ce faire, le vérin hydraulique pivote plus ou moins le mécanisme de coupe et la poutre porteuse vers le haut autour de la deuxième articulation.

Le mécanisme de coupe est entraîné au moyen d'un dispositif de transmission comportant un premier arbre de transmission télescopique à joints universels lié d'une part à une prise de force du véhicule moteur et d'autre part à un carter de renvoi de la faucheuse lequel transmet le mouvement au mécanisme de coupe par l'intermédiaire d'un deuxième arbre de transmission.

Une telle faucheuse peut rapidement être amenée d'une position de travail dans une position intermédiaire ou inversement ce qui permet de faciliter les manoeuvres en bout de parcelle par exemple.

En outre, lors de la mise en position intermédiaire, la structure d'attelage, à laquelle est lié le carter de renvoi, conserve sa position initiale ce qui permet au premier arbre de transmission télescopique à joints universels de toujours travailler dans des conditions acceptables.

Cependant cette faucheuse présente un inconvénient majeur. En effet, on remarquera que la deuxième articulation, liant la structure porteuse à la structure d'attelage, est située dans le proche voisinage du mécanisme de coupe ce qui se traduit par un espace insuffisant entre le mécanisme de coupe et le sol lorsque ledit mécanisme de coupe s'étend dans une position intermédiaire. Dans ce cas, on risque de défaire, lors des manoeuvres en bout de parcelle, les andains de fourrage préalablement formés par la faucheuse. En sus, la moindre inégalité du sol risque de provoquer une collision entre le mécanisme de coupe et ledit sol ce qui risque de détériorer la faucheuse.

Enfin, une position intermédiaire, où la garde au sol du mécanisme de coupe est insuffisante, oblige non seulement l'opérateur de prêter une attention particulière à la faucheuse lors des opérations de manoeuvre en bout de parcelle, mais à effectuer en plus des manoeuvres supplémentaires pour éviter de détériorer ladite faucheuse.

Le document **GB-A-851 711** décrit une autre faucheuse agricole comportant un châssis lié à deux bras d'attelage inférieurs et un bras d'attelage supérieur d'un tracteur, une barre de coupe liée audit châssis, un levier lié d'une part à l'un des bras d'attelage inférieurs au moyen d'une articulation et d'autre part au châssis au moyen d'une autre articulation. Il est en sus prévu un ressort s'appuyant sur une partie du levier et sur le châssis.

Pour être amenée d'une position de travail dans une position intermédiaire ou inversement, cette faucheuse connue est relevée au moyen des bras d'attelage du tracteur. De ce fait lors de la mise en position intermédiaire, le châssis ne conserve pas sa position initiale ce qui peut perturber le fonctionnement de l'arbre de transmission télescopique à joints universels destiné à entraîner ladite barre de coupe.

Le but de la présente invention est de remédier aux inconvénients de ces faucheuses connues, tout en conservant une mise en position intermédiaire rapide et de bonnes conditions de travail du dispositif de transmission.

A cet effet, la machine agricole est caractérisée par le fait que ledit dispositif comporte un élément de manoeuvre muni d'un vérin de manoeuvre destiné à déplacer ladite structure d'attelage par rapport audit deuxième point d'attelage inférieur dans la position de travail ou dans l'autre position.

L'invention concerne également les caractéristiques suivantes considérées isolément ou dans toutes leurs combinaisons techniquement possibles :
- le dispositif comporte un élément de manoeuvre permettant de déplacer la structure d'attelage par rapport au deuxième point d'attelage inférieur et un élément de maintien permettant au véhicule moteur de tirer ou de pousser la machine agricole lors du travail ;
- l'élément de manoeuvre est lié directement ou indirectement à la structure d'attelage et directement ou indirectement au deuxième point d'attelage inférieur ;
- l'élément de maintien est une bielle de traction liée d'une part directement ou indirectement à la structure d'attelage au moyen d'une première articulation d'axe longitudinal au moins sensiblement horizontal et transversal à la direction d'avance ;
- le deuxième point d'attelage inférieur est lié à la bielle de traction ;
- l'élément de manoeuvre comporte un vérin de manoeuvre lié d'une part à la structure d'attelage au moyen d'une deuxième articulation et d'autre part à la bielle de traction au moyen d'une troisième articulation ;
- le dispositif est destiné à venir d'une autre position que celle de travail dans la position de travail sous l'effet du poids de la machine agricole ;
- le dispositif comporte en sus une structure fixe destinée à être fixée d'une part à la structure d'attelage et supportant d'autre part la bielle de traction au moyen de la première articulation ;
- pour définir la position intermédiaire maximum correspondant à un pivotement maximum de la structure d'attelage autour du point d'attelage inférieur appartenant à ladite structure d'attelage, la position la plus éloignée de la structure d'attelage du deuxième point d'attelage inférieur est limitée au moyen d'une butée ;
- la machine agricole comporte :
   - un mécanisme de coupe lié directement ou indirectement à la structure d'attelage et destiné à occuper au moins une position de travail, au moins une position de transport, et au moins une autre position intermédiaire ; le dispositif permettant d'amener ledit mécanisme de coupe d'une position de travail dans une position intermédiaire ou inversement ;
   - un deuxième dispositif permettant d'amener ledit mécanisme de coupe dans une position de transport ; et
   - un troisième dispositif destiné à alléger le mécanisme de coupe en position de travail.
- le troisième dispositif destiné à alléger le mécanisme de coupe comporte un accumulateur d'énergie lié directement ou indirectement à la structure d'attelage et directement ou indirectement au mécanisme de coupe ;
- la machine de coupe comporte une poutre porteuse liée d'une part au mécanisme de coupe au moyen d'une quatrième articulation et d'autre part directement ou indirectement à la structure d'attelage au moyen d'une cinquième articulation et d'une sixième articulation ;
- l'accumulateur d'énergie comporte un vérin et un accumulateur de pression, ledit vérin étant lié d'une part directement ou indirectement à la structure d'attelage et d'autre part à la poutre porteuse au moyen d'une septième articulation ;
- pour augmenter la garde au sol du mécanisme de coupe sans pour autant pivoter davantage la structure d'attelage autour du point d'attelage inférieur de cette dernière, le dispositif, permettant d'amener le mécanisme de coupe d'une position de travail dans une position intermédiaire ou inversement, est combiné avec le troisième dispositif destiné à alléger le mécanisme de coupe en position de travail ;
- le dispositif permettant d'amener le mécanisme de coupe d'une position de travail dans une position intermédiaire ou inversement commande le troisième dispositif destiné à alléger ledit mécanisme de coupe de manière à pivoter la structure d'attelage autour du point d'attelage inférieur de cette dernière tout en pivotant la poutre porteuse et le mécanisme de coupe autour de la cinquième articulation ;
- le vérin de manoeuvre du dispositif est en communication avec le vérin de l'accumulateur d'énergie du troisième dispositif ;
- le vérin de manoeuvre du dispositif comporte deux chambres, la première chambre étant destinée à communiquer avec une centrale hydraulique du véhicule moteur et la deuxième chambre étant en communication avec la chambre unique du vérin de l'accumulateur d'énergie ;
- il est prévu un premier robinet destiné à autoriser ou interdire la communication entre la centrale hydraulique du véhicule moteur et la première chambre du vérin de manoeuvre ;
- il est prévu un deuxième robinet destiné à autoriser ou interdire la communication entre la centrale hydraulique du véhicule moteur avec la deuxième chambre du vérin de manoeuvre, l'accumulateur de pression et la chambre unique du vérin de l'accumulateur d'énergie ce qui permet notamment de régler l'intensité de l'allégement du mécanisme de coupe ;
- il est prévu un moyen autorisant uniquement le passage du fluide vers la première chambre du vérin de manoeuvre et limitant le débit du fluide entre ladite première chambre et la centrale hydraulique du véhicule moteur ce qui permet une sortie rapide du vérin de manoeuvre pour une mise en position intermédiaire du mécanisme de coupe rapide et au contraire une rentrée moins rapide dudit vérin de manoeuvre pour assurer une mise en position de travail dudit mécanisme de coupe moins brutale ;
- le deuxième dispositif permettant d'amener ledit mécanisme de coupe dans une position de transport comporte un autre vérin permettant de pivoter le mécanisme de coupe d'une position intermédiaire dans une position de transport ou inversement autour de la sixième articulation ;
- l'autre vérin du deuxième dispositif comporte :
   - une première chambre destinée à communiquer avec la centrale hydraulique du véhicule moteur et ;
   - une deuxième chambre destinée à communiquer avec la centrale hydraulique du véhicule moteur par l'intermédiaire d'un troisième robinet ;
- le troisième robinet comporte ou est combiné avec un deuxième moyen permettant dans une position dudit troisième robinet, uniquement le passage du fluide vers la deuxième chambre de l'autre vérin et en interdit la sortie ;
- le troisième dispositif destiné à alléger le mécanisme de coupe comporte un vérin supplémentaire lié d'une part directement ou indirectement à la structure d'attelage et d'autre part au vérin de l'accumulateur d'énergie ;
- le vérin supplémentaire et le vérin de l'accumulateur d'énergie comportent une tige de vérin commune et le corps dudit vérin supplémentaire est lié directement ou indirectement à la structure d'attelage ;
- le vérin supplémentaire comporte une autre chambre unique destinée à communiquer avec la centrale hydraulique du véhicule moteur et la première chambre du vérin de manoeuvre ;
- la première et la deuxième chambres du vérin de manoeuvre, la chambre unique du vérin de l'accumulateur d'énergie, la première et la deuxième chambres de l'autre vérin du deuxième dispositif et le cas échéant la chambre du vérin supplémentaire sont agencées entre elles de manière à former un réseau destiné à communiquer avec la centrale hydraulique du véhicule moteur au moyen d'une alimentation unique.

D'autres objets et caractéristiques ressortiront de la description ci-après avec référence aux dessins annexés qui représentent à titre d'exemples non limitatifs quelques formes de réalisation de la machine de coupe équipée du dispositif selon l'invention.

Sur ces dessins :
- la figure 1 représente partiellement une machine de coupe selon l'invention en vue de côté ;
- la figure 2 est une vue de dessus en coupe suivant le plan II défini sur la figure 1 sans le capot, la machine de coupe est liée à un véhicule moteur et est dans une position de travail ;
- la figure 3 est une vue de derrière de la machine de coupe de la figure 2 ;
- la figure 4 est une vue de derrière de la machine de coupe de la figure 2 dans une position intermédiaire sur laquelle ont été effectuées quelques coupes partielles ;
- la figure 5 représente un schéma des différents dispositifs agissant sur le mécanisme de coupe en position de travail, selon une première forme de réalisation ;
- la figure 6 représente le schéma de la figure 5 en position intermédiaire ;
- la figure 7 représente le schéma de la figure 5 en position de transport ;
- la figure 8 représente un schéma des différents dispositifs en position de travail selon une deuxième forme de réalisation ;
- la figure 9 représente un schéma des différents dispositifs en position de travail selon une troisième forme de réalisation.

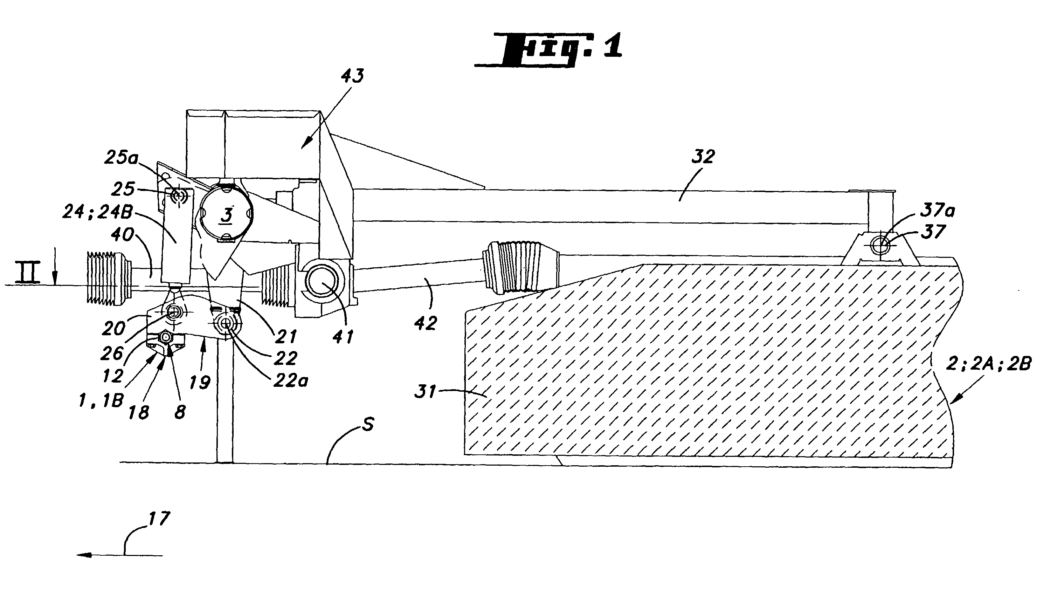

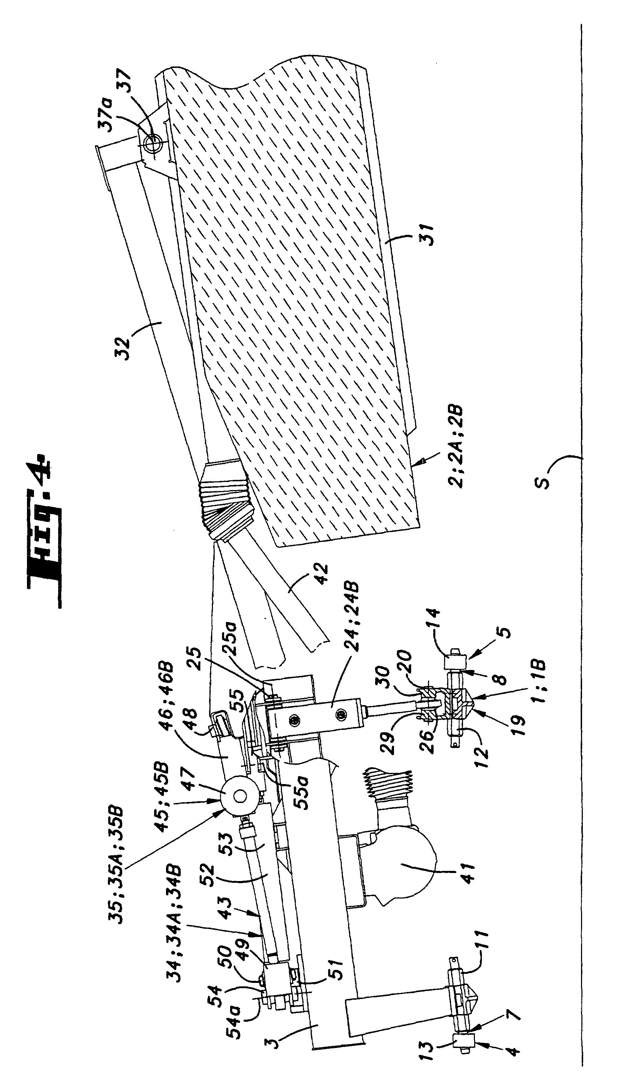

A la lumière des figures 1 à 4, on voit une machine de coupe selon l'invention équipée d'un dispositif (1) permettant de l'amener d'une position de travail dans une autre position ou inversement.

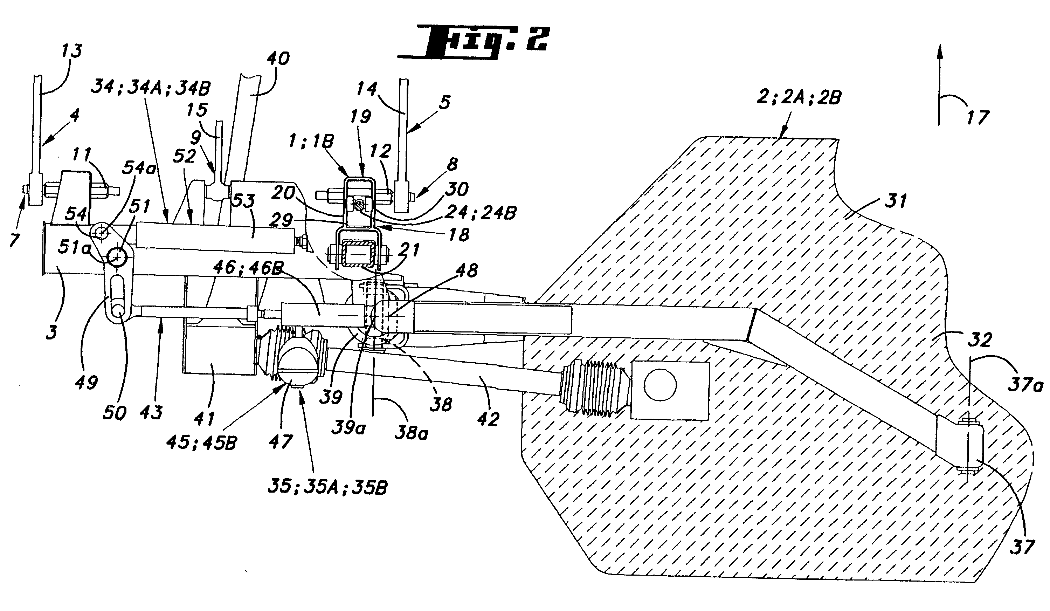

Selon l'exemple de réalisation représenté la machine de coupe est une faucheuse (2) comportant une structure d'attelage (3) liée à un dispositif d'attelage arrière (4) d'un véhicule moteur (5) (figures 2, 3 et 4) au moyen de deux points d'attelage inférieurs (7, 8) et un point d'attelage supérieur (9).

A cet effet, chaque point d'attelage inférieur (7, 8) comporte un tourillon (11, 12) auquel est lié un bras d'attelage inférieur (13, 14) correspondant appartenant au dispositif d'attelage arrière (4) du véhicule moteur (5). Le point d'attelage supérieur (9) quant à lui est lié à une biellette réglable (15) faisant également partie du dispositif d'attelage arrière (4). Les deux bras d'attelage inférieurs (13, 14) du dispositif d'attelage arrière (4) du véhicule moteur (5) peuvent être relevés ce qui permet entre autres de déplacer en hauteur la structure d'attelage (3) de la faucheuse (2).

On notera que durant le travail, le véhicule moteur (5) déplace la faucheuse (2) dans le sens d'avance ( 17).

Dans la suite de la description, les notions suivantes "avant" et "arrière", "devant" et "derrière" sont définies par rapport au sens d'avance (17) et les notions "droite" et "gauche" sont définies en regardant la faucheuse (2) de l'arrière dans le sens d'avance (17).

On remarquera que le premier point d'attelage inférieur (7) et le point d'attelage supérieur (9) appartiennent à la structure d'attelage (3) alors que le deuxième point d'attelage inférieur (8) fait partie du dispositif (1). On notera en sus que le premier point d'attelage inférieur (7) est situé à gauche du point d'attelage supérieur (9) alors que le deuxième point d'attelage inférieur (8) est situé à droite dudit point d'attelage supérieur (9).

La structure d'attelage (3) peut encore être déplacée par rapport au deuxième point d'attelage inférieur (8) au moyen du dispositif (1). A cet effet, le dispositif (1) comporte un élément de manoeuvre (18) lié directement ou indirectement à la structure d'attelage (3) et directement ou indirectement au deuxième point d'attelage inférieur (8). Le dispositif (1) comporte en outre un élément de maintien (19) permettant notamment au véhicule moteur (5) de tirer la faucheuse (2) dans le sens d'avance (17) lors du travail. Cet élément de maintien (19) est, selon l'exemple de réalisation représenté, une bielle de traction (20) liée à une structure fixe (21) au moyen d'une première articulation (22) cylindrique d'axe longitudinal (22a) au moins sensiblement horizontal et orthogonal au sens d'avance (17), ladite structure fixe (21) étant fixée à la structure d'attelage (3).

On remarquera que le tourillon (12) du deuxième point d'attelage inférieur (8) est fixé à la bielle de traction (20) et est situé en position de travail devant la première articulation (22) et sensiblement à la même distance du sol que cette dernière.

L'élément de manoeuvre ( 18) comporte un vérin de manoeuvre (24) lié d'une part à la structure d'attelage (3) au moyen d'une deuxième articulation (25) cylindrique d'axe longitudinal (25a) au moins sensiblement horizontal et orthogonal au sens d'avance (17) et d'autre part à la bielle de traction (20) au moyen d'une troisième articulation (26) sphérique. En position de travail, le vérin de manoeuvre (24) s'étend sensiblement verticalement. A cet effet, la deuxième articulation (25) est située à la hauteur du point d'attelage (9) de la structure d'attelage (3), tandis que la troisième articulation (26) est située en dessous de ladite deuxième articulation (25) et quelque peu plus haut que le deuxième point d'attelage inférieur (8).

A la lumière de la figure 2, on voit que la bielle de traction (20) est, selon l'exemple de réalisation représenté, un profilé creux comportant deux ailes (29, 30) permettant de monter la première articulation (22) et la troisième articulation (26) en chape.

Ce dispositif (1) permettant d'amener la faucheuse (2) d'une position de travail dans une autre position ou inversement fonctionne de la manière suivante.

Lorsque la faucheuse (2) est en position de travail, le vérin de manoeuvre (24) est alimenté en fluide de manière que ce dernier s'allonge. A cet effet, le tourillon (12) du deuxième point d'attelage inférieur (8) s'appuie sur le bras d'attelage inférieur (14) du véhicule moteur (5), ce qui a pour effet d'éloigner la structure d'attelage (3) du deuxième point d'attelage inférieur (8). Lors de cette opération, la structure d'attelage (3) pivote autour du premier point d'attelage inférieur (7) et en même temps la bielle de traction (20) pivote autour de l'axe longitudinal (22a) de la première articulation (22).

La position la plus éloignée de la structure d'attelage (3) du deuxième point d'attelage inférieur (8) est limitée par une butée qui est, selon l'exemple de réalisation représenté, définie par la longueur maximum du vérin de manoeuvre (24).

Lorsque le fluide peut s'échapper du vérin de manoeuvre (24) le dispositif (1), plus précisément le vérin de manoeuvre (24), revient dans sa position initiale sous l'effet du poids de la faucheuse (2).

A la lumière des figures 1 à 4, on voit en sus que la faucheuse (2) comporte encore un mécanisme de coupe (31), une poutre porteuse (32) et trois dispositifs (1, 34, 35). Le premier dispositif étant le dispositif (1) décrit précédemment permettant de déplacer la structure d'attelage (3) par rapport au deuxième point d'attelage inférieur (8). Le mécanisme de coupe (31) quant à lui ne sera pas décrit en détail : il peut en effet s'agir de n'importe quel type de mécanisme de coupe.

Ce mécanisme de coupe (31) est lié à la structure d'attelage (3) au moyen de la poutre porteuse (32). A cet effet, la poutre porteuse (32) est liée au mécanisme de coupe (31) au moyen d'une quatrième articulation (37) cylindrique d'axe longitudinal (37a) sensiblement horizontal et dirigée vers l'avant lorsque le mécanisme de coupe (31) est en position normale de travail dans laquelle il s'étend au moins sensiblement orthogonalement à la direction d'avance (17).

La poutre porteuse (32) est également liée à la structure d'attelage (3) au moyen d'une cinquième articulation (38) et d'une sixième articulation (39) de telle sorte que cette dernière permette le pivotement de la cinquième articulation (38) conjointement avec la poutre porteuse (32) par rapport à la structure d'attelage (3).

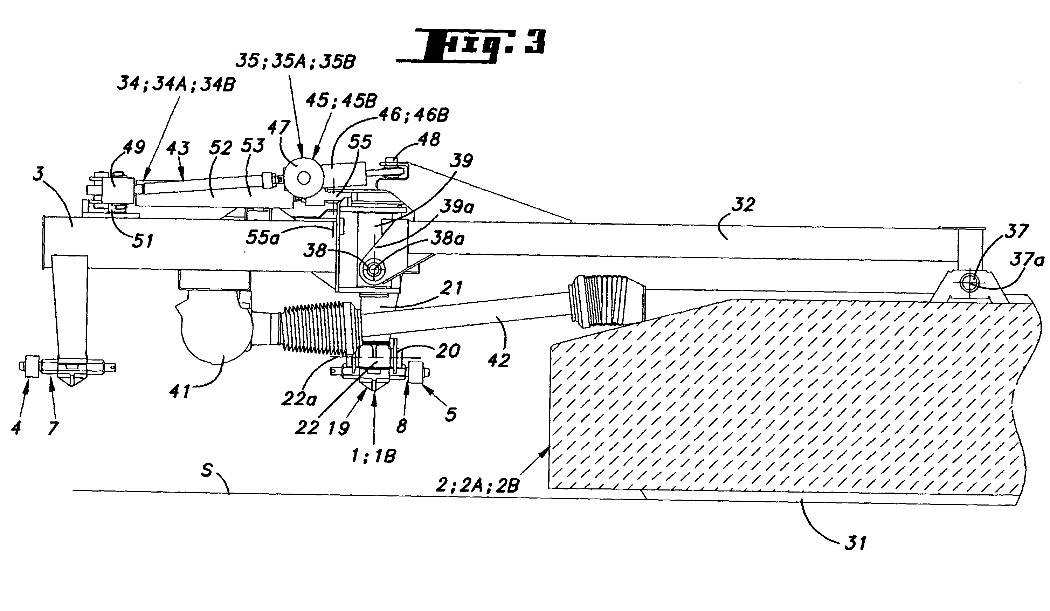

Cette cinquième articulation (38) est une articulation cylindrique d'axe (38a) dirigée vers l'avant lorsque le mécanisme de coupe (31) est en position normale de travail (dans l'exemple représenté, l'axe (38a) est au moins sensiblement dirigé suivant la direction de travail (17)). A la lumière de la figure 3, il apparaît du reste que la cinquième articulation (38) s'étend au moins sensiblement au même niveau par rapport au sol que la quatrième articulation (37). La sixième articulation (39) est également une articulation cylindrique mais d'axe (39a) dirigé vers le haut (dans l'exemple représenté, l'axe (39a) est au moins sensiblement vertical). Il apparaît par ailleurs que l'axe (38a) de la cinquième articulation (38) et l'axe (39a) de la sixième articulation (39) sont au moins sensiblement sécants.

La quatrième articulation (37) et cette cinquième articulation (38) permettent au mécanisme de coupe (31) de suivre le relief du sol lors de la coupe.

La sixième articulation (39) quant à elle permet au mécanisme de coupe (31) de pivoter vers l'arrière pour le transport notamment.

Le deuxième dispositif (34) permet d'amener ledit mécanisme de coupe (31) d'une position de transport dans une position de travail ou inversement et le troisième dispositif (35) permet d'alléger ledit mécanisme de coupe (31) en position de travail.

Le mécanisme de coupe (31) comporte des organes de coupe (non représentés) animés par une source motrice qui est, dans l'exemple représenté, constituée par la prise de force (non représentée) du véhicule moteur (5). Toute autre source motrice est cependant envisageable. La prise de force du véhicule moteur (5) entraîne dans les grandes lignes un premier arbre de transmission télescopique (40), un carter de renvoi (41), un deuxième arbre de transmission télescopique (42) lequel entraîne le mécanisme de coupe (31).

Le deuxième dispositif (34) permettant d'amener le mécanisme de coupe (3 1) d'une position de travail et/ou d'une position intermédiaire dans une position de transport ou inversement ainsi que le troisième dispositif (35) permettant d'alléger ledit mécanisme de coupe (31) en position de travail, font partie d'un dispositif de sécurité (43). Ce dispositif de sécurité (43) est semblable au dispositif de sécurité décrit par le document FR 2 719 189 et permet de maintenir le mécanisme de coupe (31) dans sa position normale de travail, mais autorise le pivotement de ce dernier conjointement avec la poutre porteuse (32) vers l'arrière autour de l'axe (38a) de la cinquième articulation (38) et vers le haut autour de l'axe (39a) de la sixième articulation (39) au cas où le mécanisme de coupe (31) heurtait pendant le travail un obstacle se trouvant dans le champ.

Pour de plus amples détails, on pourra se reporter, en cas de besoin, au texte du document FR 2 719 189.

Le troisième dispositif (35) comporte un accumulateur d'énergie (45) comprenant un vérin (46) et un accumulateur de pression (47). Le vérin (46) est lié à l'une de ses extrémités à la poutre porteuse (32) au moyen d'une septième articulation (48) sphérique et à l'autre de ses extrémités à un organe pivotant (49) au moyen d'une huitième articulation (50) qui a été amplement décrit dans le document FR 2 719 189. Ledit organe pivotant (49) est lui-même lié à la structure d'attelage (3) au moyen d'une neuvième articulation (51) cylindrique d'axe longitudinal (5 la) dirigé vers le haut (dans l'exemple représenté l'axe (5 la) est au moins sensiblement vertical). Sur la figure 3, on voit que la septième articulation (48) s'étend sensiblement au-dessus de la cinquième articulation (38). L'effort exercé par l'accumulateur d'énergie (45) crée ainsi un moment par rapport à l'axe (38a) qui a pour effet de réduire la pression avec laquelle le mécanisme de coupe (31) repose au sol (S). Le troisième dispositif (35) remplit ainsi une fonction d'allégement du mécanisme de coupe (31).

Le deuxième dispositif (34) comporte quant à lui une bielle (52) qui est, selon l'exemple de réalisation représenté, un autre vérin (53) lié à l'une de ses extrémités à l'organe pivotant (49) au moyen d'une dixième articulation (54) cylindrique d'axe longitudinal (54a) au moins sensiblement parallèle à l'axe longitudinal (51a) de la neuvième articulation (51). A l'autre de ses extrémités, l'autre vérin (53) est lié à la poutre porteuse (32) au moyen d'une onzième articulation (55) d'axe longitudinal (55a) au moins sensiblement parallèle à l'axe longitudinal (51a) de la neuvième articulation (51). On remarquera que cette onzième articulation (55) s'étend à une certaine distance de la sixième articulation (39) de telle sorte que l'autre vérin (53) puisse agir avec un certain bras de levier par rapport à l'axe (39a) de ladite sixième articulation (39) sur la poutre porteuse (32).

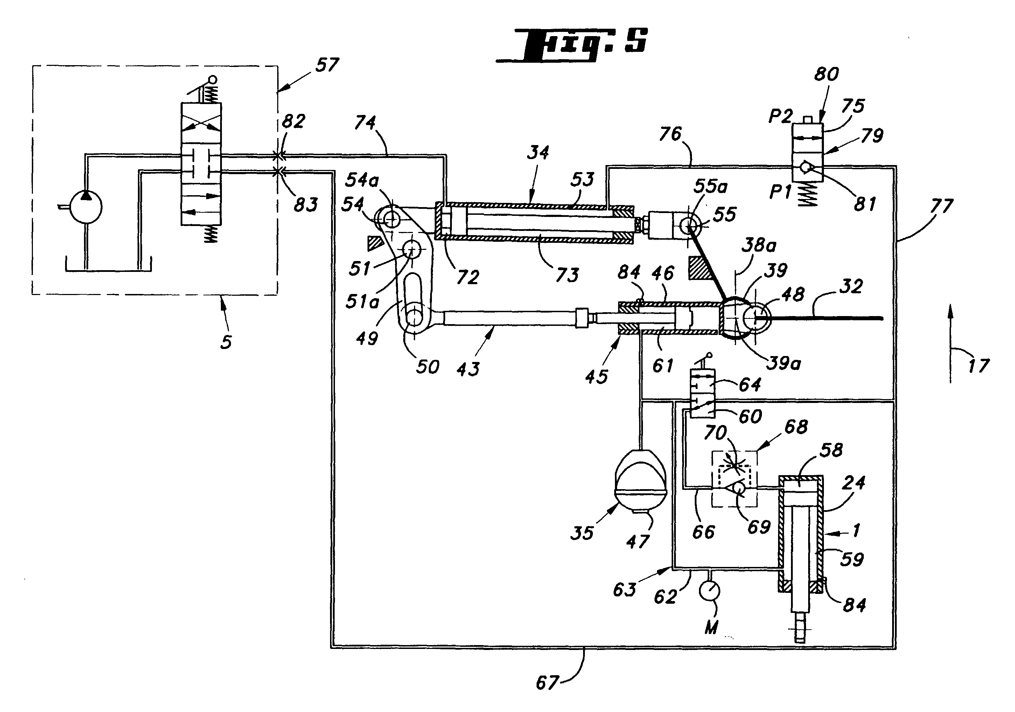

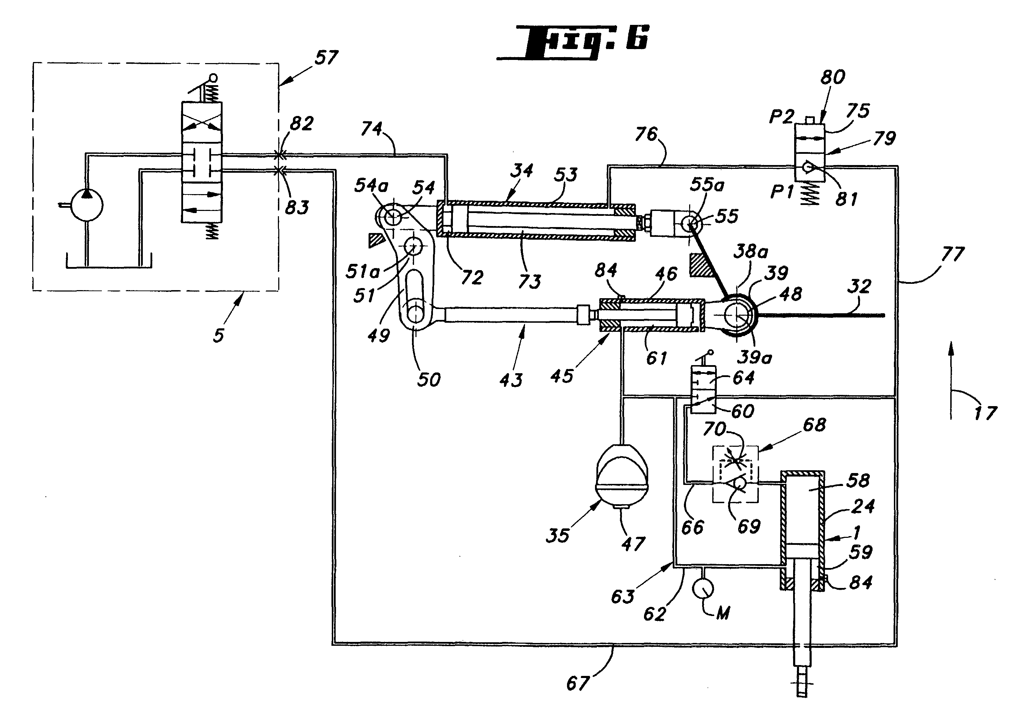

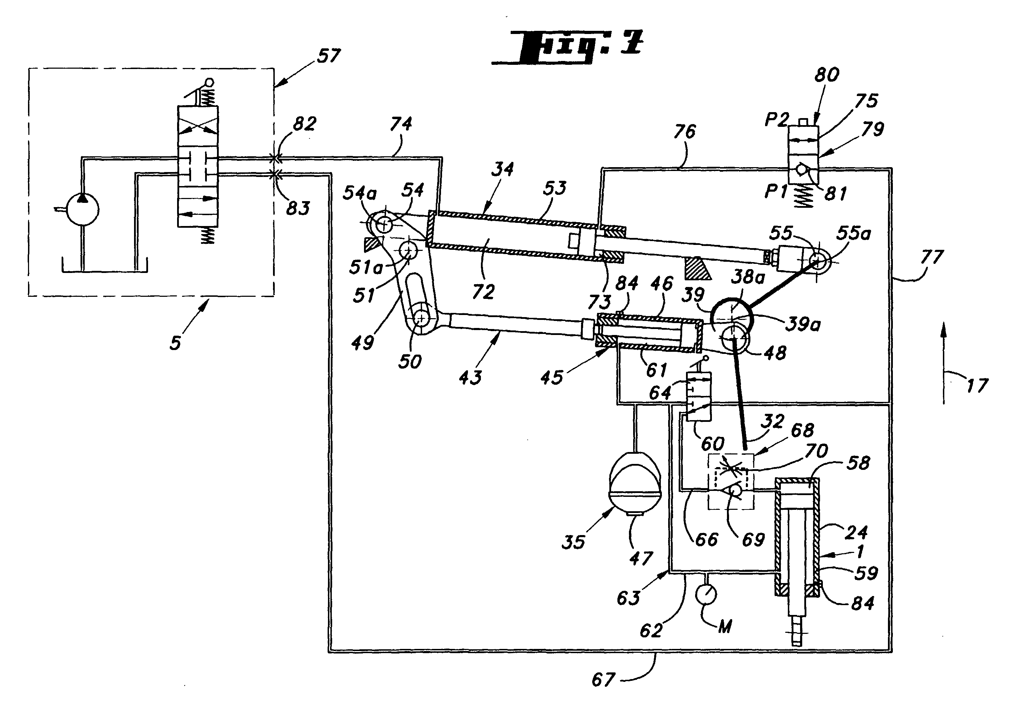

Les figures 5 à 7 représentent de manière schématique une première forme de réalisation et d'agencement des différents dispositifs (1, 34, 35) agissant sur le mécanisme de coupe (31).

A la lumière de ces figures, on voit que le premier dispositif (1), permettant d'amener le mécanisme de coupe (31) d'une position de travail dans une position intermédiaire ou inversement, est combiné avec le troisième dispositif (35) permettant d'alléger ledit mécanisme de coupe (31) en position de travail, plus précisément ledit premier dispositif (1) commande ledit troisième dispositif (35). A cet effet, le vérin de manoeuvre (24) est en communication avec le vérin (46) de l'accumulateur d'énergie (45) du troisième dispositif (35) et avec une centrale hydraulique (57) du véhicule moteur (5). Pour cela, le vérin de manoeuvre (24) comporte deux chambres (58, 59), la première chambre (58) (la plus grande) est destinée à communiquer avec la centrale hydraulique (57) du véhicule moteur (5) par l'intermédiaire d'un premier robinet (60), alors que la deuxième chambre (59) est en communication avec la chambre unique (61) du vérin (46) de l'accumulateur d'énergie (45). On notera que la chambre unique (61) du vérin (46), la deuxième chambre (59) du vérin de manoeuvre (24) et l'accumulateur de pression (47) de l'accumulateur d'énergie (45) communiquent entre eux au moyen d'une première conduite (62) de manière à former un circuit fermé (63). On remarquera encore que ce circuit fermé (63) peut communiquer avec la centrale hydraulique (57) du véhicule moteur (5) par l'intermédiaire d'un deuxième robinet (64) qui autorise ou qui interdit ladite communication entre ledit circuit fermé (63) et la centrale hydraulique (57).

On notera que la première chambre (58) du vérin de manoeuvre (24) est en communication avec le premier robinet (60) au moyen d'une deuxième conduite (66) et ledit premier robinet (60) est en communication avec la centrale hydraulique (57) au moyen d'une troisième conduite (67).

Le premier robinet (60) quant à lui est destiné à autoriser ou à interdire la communication entre la centrale hydraulique (57) du véhicule moteur (5) et la première chambre (58) du vérin de manoeuvre (24).

On remarquera encore que, selon l'exemple de réalisation représenté, le premier et le deuxième robinets (60, 64) sont agencés l'un à l'autre de manière à former un distributeur autorisant une communication de la centrale hydraulique (57) du véhicule moteur (5) soit avec la première chambre (58) du vérin de manoeuvre (24), ou alors avec le circuit fermé (63).

Il est en outre prévu un moyen (68) autorisant uniquement le passage du fluide vers la première chambre (58) du vérin de manoeuvre (24) et limitant le débit de fluide entre ladite première chambre (58) et la centrale hydraulique (57) du véhicule moteur (5). Ce moyen (68) permet au vérin de manoeuvre (24) de s'allonger relativement rapidement mais de se raccourcir à une vitesse plus faible. A cet effet, selon l'exemple de réalisation représenté, le moyen (68) comporte d'une part un clapet anti-retour (69) permettant le passage du fluide en provenance de la centrale hydraulique (57) vers la première chambre (58) et interdisant le passage du fluide dans le sens inverse, et d'autre part un étranglement réglable (70) par lequel le fluide est obligé de passer lors du raccourcissement du vérin de manoeuvre (24), ledit étranglement réglable (70) étant branché en parallèle avec ledit clapet anti-retour (69).

A la lumière des figures 5 à 7, on voit en sus que l'autre vérin (53) du deuxième dispositif (34) est un vérin double effet et comporte à cet effet deux chambres (72, 73). La première chambre (72) (la plus grande) est destinée à communiquer avec la centrale hydraulique (57) du véhicule moteur (5) au moyen d'une quatrième conduite (74) alors que la deuxième chambre (73) est destinée à communiquer avec la centrale hydraulique (57) du véhicule moteur (5) par l'intermédiaire d'un troisième robinet (75). A cet effet est prévue une cinquième conduite (76) reliant la deuxième chambre (73) au troisième robinet (75) et une sixième conduite (77) reliant ledit troisième robinet (75) à la troisième conduite (67) laquelle est en communication avec la centrale hydraulique (57) du véhicule moteur (5).

Le troisième robinet (75) comporte un deuxième moyen (79) permettant d'une part uniquement le passage du fluide vers la deuxième chambre (73) de l'autre vérin (53) et interdisant la sortie dudit fluide de ladite deuxième chambre (73) et d'autre part dans une autre configuration, le libre passage du fluide quel que soit le sens du flux. A cet effet, selon l'exemple de réalisation représenté, le troisième robinet (75) est un distributeur (80) à deux positions (P1, P2), la position (P1) étant celle qui permet uniquement le passage du fluide vers la deuxième chambre (73) et la position (P2) étant celle qui permet le passage du fluide dans les deux sens. Pour ce faire, le deuxième moyen (79) comporte un deuxième clapet anti-retour (81) qui est actif lorsque le distributeur (80) occupe la position (P1) et qui autorise le passage du fluide en provenance de la centrale hydraulique (57) vers la deuxième chambre (73) de l'autre vérin (53) et interdit le passage du fluide dans le sens inverse. Ce distributeur (80) est destiné à être commandé à distance par l'opérateur. Lorsque l'opérateur n'agit pas sur le distributeur (80) celui-ci s'étend dans la position (P 1) décrite ci-dessus.

Un tel robinet (75) muni d'un tel clapet anti-retour (81) permet, selon cette forme de réalisation représentée, de protéger le circuit comprenant la sixième conduite (77), la troisième conduite (67) et la deuxième conduite (66) et le vérin de manoeuvre (24) d'une éventuelle surpression lors du pivotement vers l'arrière et vers le haut du mécanisme de coupe (31) lorsqu'il heurte un obstacle.

Enfin, à la lumière des figures 5 à 7, on voit que les différentes chambres (58, 59, 61, 72, 73), les différents vérins (24, 46, 53), les différents robinets (60, 64, 75), l'accumulateur de pression (47), le clapet anti-retour (69), l'étranglement réglable (70) et les différentes conduites (62, 66, 67, 74, 76, 77) sont agencés entre eux de manière à former un réseau destiné à être branché avec la centrale hydraulique (57) du véhicule moteur (5) au moyen de deux prises (82, 83).

Selon l'exemple de réalisation représenté, la prise (82) est située à l'une des extrémités de la quatrième conduite (74) alors que la prise (83) est située à l'une des extrémités de la troisième conduite (67). Selon l'état de la centrale hydraulique (57), deux cas de figures peuvent se présenter, un premier cas de figures où l'alimentation du réseau sus-citée se fait par la quatrième conduite (74) et le retour par la troisième conduite (67) et, un deuxième cas de figures où l'alimentation se fait par ladite troisième conduite (67) et le retour par la quatrième conduite (74).

Dans tous les cas de figures, le réseau ne peut être alimenté qu'au moyen d'une alimentation unique à la fois.

On remarquera encore que le circuit fermé (63) comporte des vis de purge (84) destinées, lors de la mise en service de la faucheuse (2), à permettre l'évacuation de l'air dudit circuit fermé (63).

Cette faucheuse (2) représentée sur les figures 1 à 7 fonctionne de la façon suivante.

La faucheuse (2) est liée au véhicule moteur (5) comme décrit précédemment.

En position de transport, le mécanisme de coupe (31) s'étend au-dessus du sol (S) et sensiblement derrière la structure d'attelage (3).

Pour amener la faucheuse (2) de la position de transport dans la position intermédiaire dans laquelle le mécanisme de coupe (31) s'étend au-dessus du produit fauché ou à faucher, l'opérateur alimente, au moyen de la centrale hydraulique (57) du véhicule moteur (5), la première chambre (58) du vérin de manoeuvre (24) et la deuxième chambre (73) de l'autre vérin (53). A cet effet, le fluide en provenance de la centrale hydraulique (57) passe successivement par la troisième conduite (67), le premier robinet (60), la deuxième conduite (66) et le clapet anti-retour (69) pour arriver à la première chambre (58) du vérin de manoeuvre (24). En même temps, après avoir emprunté une partie de la troisième conduite (67), une partie du fluide bifurque en passant successivement par la sixième conduite (77), le deuxième clapet anti-retour (81) et la cinquième conduite (76) pour arriver à la deuxième chambre (73) de l'autre vérin (53). A cet effet, le vérin de manoeuvre (24) s'allonge ce qui fait pivoter la structure d'attelage (3) autour du premier point d'attelage inférieur (7) vers le haut, alors que l'autre vérin (53) raccourcit ce qui fait pivoter la poutre porteuse (32) et le mécanisme de coupe (31) vers l'avant autour de l'axe longitudinal (39a) de la sixième articulation (39) jusqu'à ce que ledit mécanisme de coupe (31) s'étend en position intermédiaire.

On remarquera que, lors de la mise en position intermédiaire, lorsque le vérin de manoeuvre (24) s'allonge, le fluide qui s'étend dans la deuxième chambre (59) dudit vérin de manoeuvre (24) est chassé dans le reste du circuit fermé (63) ce qui a pour effet d'augmenter la pression qui règne dans ledit circuit fermé (63). A cet effet, le vérin (46) de l'accumulateur d'énergie (45) se raccourcit ce qui a pour effet de faire pivoter la poutre porteuse (32) et le mécanisme de coupe (31) vers le haut autour de l'axe (38a) de la cinquième articulation (38) permettant ainsi en position de transport d'augmenter davantage la garde au sol dudit mécanisme de coupe (31 ).

Pour amener ensuite la faucheuse (2) de la position intermédiaire dans la position de travail, l'opérateur permet au fluide contenu dans la première chambre (58) du vérin de manoeuvre (24) de s'échapper tout ou partie de cette dernière. A cet effet, le fluide contenu dans la première chambre (58) passe successivement par l'étranglement réglable (70), la deuxième conduite (66), le premier robinet (60) et la troisième conduite (67) pour arriver à la centrale hydraulique (57). Lors de cette mise en position de travail, le vérin de manoeuvre (24) se raccourcit ce qui fait pivoter la structure d'attelage (3), la poutre porteuse (32) et le mécanisme de coupe (31) autour du premier point d'attelage inférieur (7) jusqu'à ce que ledit mécanisme de coupe (31) repose sur le sol (S). En même temps, lorsque le vérin de manoeuvre (24) se raccourcit, le volume du circuit fermé (63) augmente ce qui fait chuter la pression qui règne dans ce dernier jusqu'à atteindre la pression initiale correspondant à l'allégement souhaité du mécanisme de coupe. A cet effet, la poutre porteuse (32) et le mécanisme de coupe (31) pivotent quelque peu vers le bas autour de l'axe (38a) de la cinquième articulation (38) jusqu'à ce que ledit mécanisme de coupe (31) repose sur le sol (S). La faucheuse (2) est en position de travail.

Pour varier l'intensité de l'allégement du mécanisme de coupe (31), il suffit de varier la pression qui règne dans le circuit fermé (63). Ainsi, pour augmenter l'intensité de l'allégement du mécanisme de coupe (31), il faut augmenter la pression qui règne dans le circuit fermé (63) et inversement, pour diminuer l'intensité de l'allégement il faut diminuer ladite pression.

Pour ce faire, en position de travail par exemple, lorsque l'opérateur souhaite augmenter l'intensité de l'allégement, il active dans un premier temps le deuxième robinet (64) et alimente, dans un deuxième temps au moyen de la centrale hydraulique (57), le circuit fermé (63) pour y augmenter la pression. A cet effet, le fluide en provenance de la centrale hydraulique (57) passe successivement par la troisième conduite (67), le deuxième robinet (64) pour arriver dans le circuit fermé (63). Inversement, lorsque l'opérateur souhaite diminuer l'intensité de l'allégement, il active simplement le deuxième robinet (64) et la centrale hydraulique (57) de manière à autoriser à une partie du fluide contenu dans le circuit fermé (63) de s'échapper vers ladite centrale hydraulique (57) pour y faire chuter la pression. Dès que la pression souhaitée dans le circuit fermé (63) est atteinte, en l'occurrence l'allégement souhaité du mécanisme de coupe (31 ), l'opérateur cesse d'activer le deuxième robinet (64) et/ou la centrale hydraulique (57). Pour contrôler la pression régnant dans le circuit fermé (63) il est prévu un manomètre (M) branché en parallèle avec ledit circuit fermé (63). On remarquera encore que le premier robinet (60) et le deuxième robinet (64) ne peuvent jamais être activés en même temps, c'est-à-dire en activant l'un on désactive automatiquement l'autre.

En bout de parcelle, lors des manoeuvres par exemple, l'opérateur amène la faucheuse (2) de la position de travail dans la position intermédiaire. Pour ce faire, l'opérateur alimente au moyen de la centrale hydraulique (57) du véhicule moteur (5) la première chambre (58) du vérin de manoeuvre (24) et la deuxième chambre (73) de l'autre vérin (53). A cet effet, le vérin de manoeuvre (24) s'allonge en faisant raccourcir le vérin (46) de l'accumulateur d'énergie (45). Cette mise en position intermédiaire depuis la position de travail ne sera pas décrite plus en détail. Pour de plus amples renseignements, on pourra se reporter à la description de la mise en position intermédiaire à partir de la position de transport comme décrit précédemment. On notera toutefois que l'autre vérin (53) est, en position de travail comme en position intermédiaire, en bout de course et raccourcit au maximum et par conséquent il restera immobile lors de l'alimentation de sa deuxième chambre (73).

Pour amener la faucheuse (2) de la position de travail dans la position de transport, l'opérateur amène dans un premier temps ladite faucheuse (2) en position intermédiaire comme décrit ci-dessus.

Dans un deuxième temps, l'opérateur met le distributeur (80) dans la position (P2) de manière à autoriser un libre passage du fluide entre la cinquième et la sixième conduites (76, 77).

Ensuite, l'opérateur alimente la première chambre (72) de l'autre vérin (53) par l'intermédiaire de la quatrième conduite (74) et autorise en même temps un retour de fluide par la troisième conduite (67) au moyen de la centrale hydraulique (57).

Le fluide s'étendant dans la deuxième chambre (73) de l'autre vérin (53) s'échappe en passant successivement par la cinquième conduite (76), le distributeur (80) (en position P2), la sixième conduite (77) et ladite troisième conduite (67) pour arriver à ladite centrale hydraulique (57).

A cet effet, l'autre vérin (53) s'allonge en faisant pivoter la poutre porteuse (32) et le mécanisme de coupe (31) vers l'arrière autour de l'axe longitudinal (39a) de la sixième articulation (39) jusqu'à ce que le mécanisme de coupe (31) s'étende en position de transport. Sensiblement en même temps, le vérin de manoeuvre (24) se raccourcit, ce qui fait pivoter la structure d'attelage (3) autour du premier point d'attelage inférieur (7) vers le bas. Le fluide de la première chambre (58) du vérin de manoeuvre (24) passe quant à lui, successivement par l'étranglement réglable (70), la deuxième conduite (66), le premier robinet (60) avant de rejoindre le fluide en provenance de la deuxième chambre (73) de l'autre vérin (53) dans la troisième conduite (67).

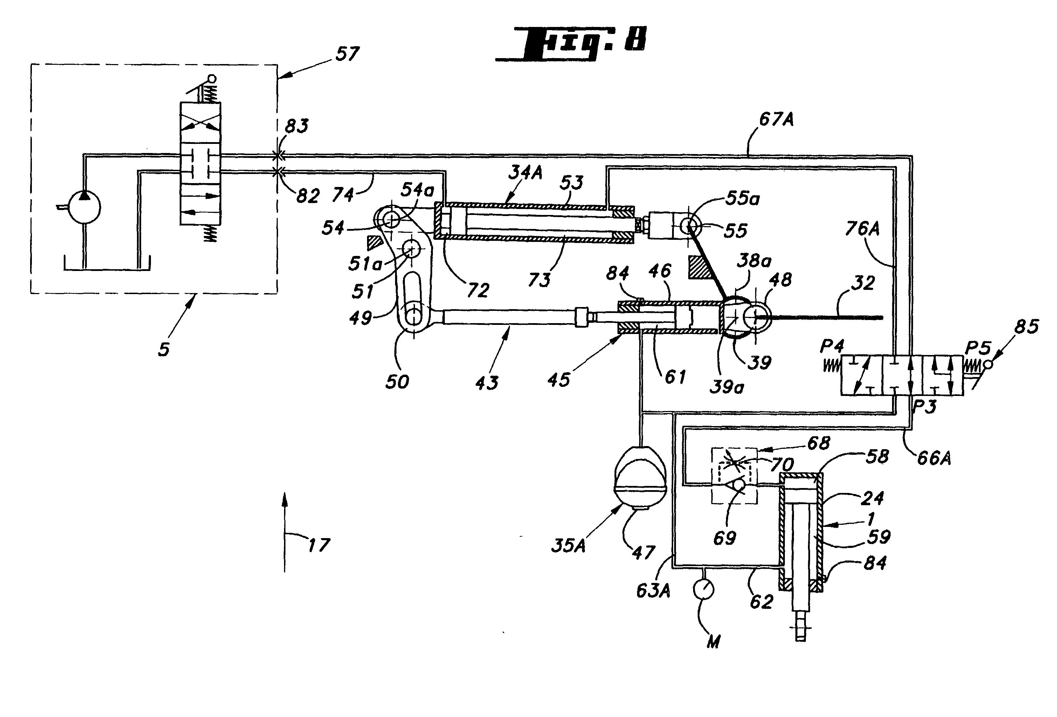

La figure 8 représente un deuxième exemple de réalisation et d'agencement des différents dispositifs (1, 34A, 35A) agissant sur le mécanisme de coupe (31). Ces différents dispositifs (1, 34A, 35A) comportent un certain nombre d'éléments qui ont été décrits précédemment. Ces éléments garderont par conséquent le même numéro de repère et ne seront pas redécrits. Ils comportent également un certain nombre d'éléments qui sont comparables à des éléments des dispositifs (1, 34, 35) suivis de la lettre A. Ils ne seront décrits que si cela s'avère nécessaire.

Le deuxième exemple de réalisation et d'agencement des différents dispositifs (1, 34A, 35A) représentés sur la figure 8 se différencie du premier par le fait que le premier robinet (60), le deuxième robinet (64) et le troisième robinet (75) forment un distributeur unique (85) à trois positions (P3, P4, P5).

Ce distributeur unique (85) permet d'agir soit sur le premier dispositif (1) ou sur le deuxième dispositif (34A) ou encore sur le troisième dispositif (35A). A cet effet, la position (P3) du distributeur unique (85) permet d'alimenter en fluide à partir de la centrale hydraulique (57) du véhicule moteur (5) la première chambre (58) du vérin de manoeuvre (24) ou de laisser échapper du fluide vers ladite centrale hydraulique (57) selon l'état de cette dernière.

La position (P4) du distributeur unique (85) permet d'alimenter en fluide le circuit fermé (63) ou d'en laisser échapper pour régler l'intensité de l'allégement du mécanisme de coupe (31).

La position (P5) du distributeur unique (85) permet soit d'alimenter en fluide la première chambre (58) du vérin de manoeuvre (24) et la deuxième chambre (73) de l'autre vérin (53) ou de laisser échapper du fluide desdites chambres (58, 73).

On notera que ce distributeur unique (85) est destiné à être commandé par l'opérateur et qu'en position neutre (lorsque l'opérateur n'agit pas sur le distributeur unique (85)) celui-ci s'étend dans la position (P3) décrite ci-dessus.

Ce deuxième exemple de réalisation avec un distributeur unique (85) permet notamment de simplifier la tâche de l'opérateur.

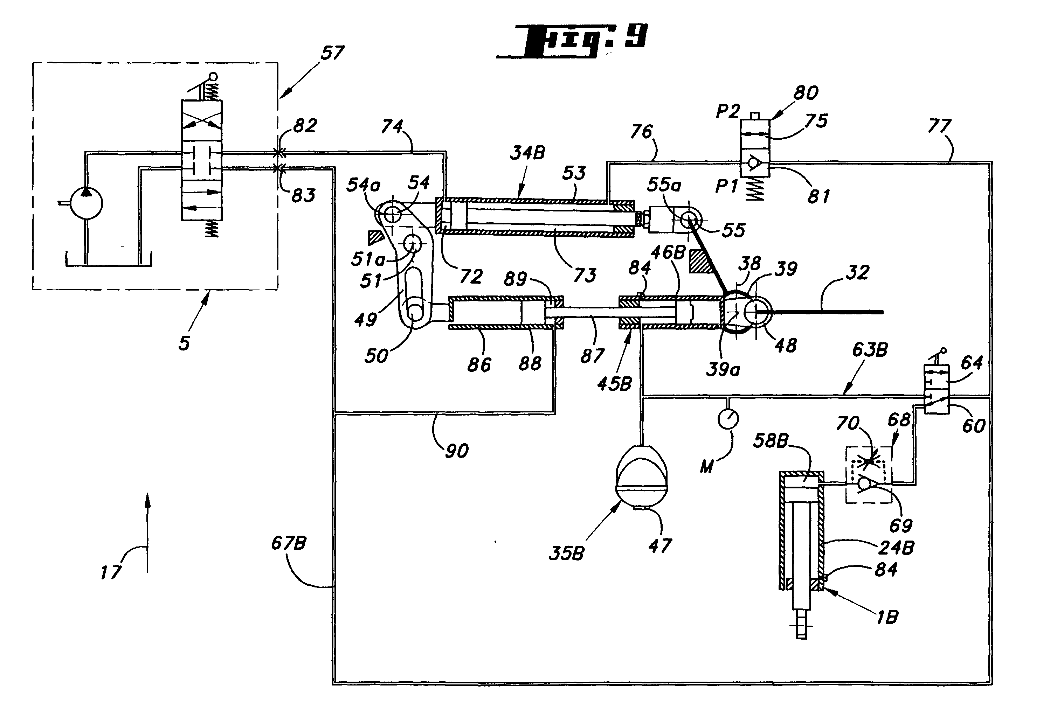

La figure 9 représente un troisième exemple de réalisation et d'agencement des différents dispositifs (1, 34B, 35B) agissant sur le mécanisme de coupe (31). Ces différents dispositifs (1, 34B, 35B) comportent un certain nombre d'éléments qui ont été décrits précédemment. Ces éléments garderont par conséquent le même numéro de repère et ne seront pas redécrits. Ils comportent également un certain nombre d'éléments qui sont comparables à des éléments des dispositifs (1, 34, 35) suivis de la lettre B. Ils ne seront décrits que si cela s'avère nécessaire.

Le troisième exemple de réalisation et d'agencement des différents dispositifs (1, 34B, 35B) représentés sur la figure 9 se différencie du premier par le fait que le vérin de manoeuvre (24B) est un vérin simple effet comportant uniquement une première chambre (58B) et que le troisième dispositif (35B) comporte un vérin supplémentaire (86). Ce vérin supplémentaire (86) est lié à l'une de ses extrémités au vérin (46B) de l'accumulateur d'énergie (45B) et à l'autre de ses extrémités à l'organe pivotant (49). Plus précisément, le vérin supplémentaire (86) et le vérin (46B) comporte une tige de vérin commune (87) et le corps (88) dudit vérin supplémentaire (86) est lié à l'organe pivotant (49).

On remarquera que le vérin supplémentaire (86) est un vérin simple effet comportant une autre chambre unique (89) qui peut communiquer avec la centrale hydraulique (57) du véhicule moteur (5) et la première chambre (58B) du vérin de manoeuvre (24B) au moyen d'une septième conduite (90) qui communique avec la troisième conduite (67B).

Lors de la mise en position intermédiaire de la faucheuse (2), le vérin supplémentaire (86) se raccourcit ce qui a pour effet d'allonger le vérin (46B) de l'accumulateur d'énergie (45B) jusqu'à ce que ledit vérin (46B) soit en bout de course ou que la pression qui règne dans le circuit fermé (63B) soit suffisante de manière que, lorsque le vérin supplémentaire (86) continu de se raccourcir, la poutre porteuse (32) et le mécanisme de coupe (31) pivotent vers le haut autour de l'axe (38a) de la cinquième articulation (38).

On remarquera que ce troisième exemple de réalisation permet avantageusement de pivoter la poutre porteuse (32) et le mécanisme de coupe (31) autour de l'axe (38a) de la cinquième articulation (38) sans être tributaire du vérin de manoeuvre (24B).

Diverses modifications peuvent être apportées aux exemples qui viennent d'être décrits, notamment en ce qui concerne la constitution des divers éléments ou par substitution d'équivalents techniques, sans pour autant sortir du domaine de protection.

C'est ainsi qu'il est par exemple possible de combiner le vérin de manoeuvre (24, 24B) avec l'accumulateur d'énergie (45, 45B) supplémentaire de manière que ledit vérin de manoeuvre (24, 24B) contribue à l'allégement du mécanisme de coupe (31).

Il est également parfaitement possible de disposer le tourillon (12) du deuxième point d'attelage inférieur (8) plus haut que la première articulation (22) liant la bielle de traction (20) à la structure fixe (21). Une telle réalisation permettrait de créer un effort vertical dirigé vers le haut sur la structure fixe (21 ) lequel contribue à l'allégement du mécanisme de coupe (31) lors du travail.

Enfin, il est bien entendu parfaitement possible d'équiper la faucheuse (2) ou une autre machine agricole avec le dispositif (1, 1B) de manoeuvre sans le combiner avec un dispositif d'allégement. A cet effet la première chambre (58, 58B) du vérin de manoeuvre (24, 24B) pourra être uniquement en communication avec la centrale hydraulique (57) du véhicule moteur (5) par l'intermédiaire du moyen (68).

## Revendications

1. Machine agricole comportant :
- une structure d'attelage (3) destinée à être attelée à un dispositif d'attelage (4) d'un véhicule moteur (5) et comprenant un point d'attelage supérieur (9) et au moins un point d'attelage inférieur (7) ; et
- un dispositif (1, 1B) permettant d'amener ladite machine agricole d'une position de travail dans laquelle ladite machine agricole repose au moins partiellement sur le sol (S), dans une autre position dans laquelle ladite machine agricole s'étend au-dessus du sol (S) ou inversement, il est prévu un deuxième point d'attelage inférieur (8) lié audit dispositif (1, 1B),
***caractérisée en ce que*** ledit dispositif (1, 1B) comporte un élément de manoeuvre (18) muni d'un vérin de manoeuvre (24, 24B) destiné à déplacer ladite structure d'attelage (3) par rapport audit deuxième point d'attelage inférieur (8) dans la position de travail ou dans l'autre position.

2. Machine agricole selon la revendication 1, ***caractérisée en ce que*** ledit élément de manoeuvre (18) est lié directement ou indirectement à ladite structure d'attelage (3) et directement ou indirectement audit deuxième point d'attelage inférieur (8).

3. Machine agricole selon la revendication 1 ou 2, ***caractérisée en ce que*** ledit dispositif (1, 1B) comporte en sus un élément de maintien (19) permettant audit véhicule moteur (5) de tirer ou de pousser ladite machine agricole lors du travail.

4. Machine agricole selon la revendication 3, ***caractérisée en ce que*** ledit élément de maintien (19) est une bielle de traction (20) liée d'une part directement ou indirectement à ladite structure d'attelage (3) au moyen d'une première articulation (22) d'axe longitudinal (22a) au moins sensiblement horizontal et transversal à une direction d'avance (17).

5. Machine agricole selon la revendication 4, ***caractérisée en ce que*** ledit deuxième point d'attelage inférieur (8) est lié à ladite bielle de traction (20).

6. Machine agricole selon la revendication 4 ou 5, ***caractérisée en ce que*** ledit vérin de manoeuvre (24, 24B) est lié d'une part à ladite structure d'attelage (3) au moyen d'une deuxième articulation (25) et d'autre part à ladite bielle de traction (20) au moyen d'une troisième articulation (26).

7. Machine agricole selon l'une quelconque des revendications 1 à 6,
***caractérisée en ce que*** ledit dispositif (1, 1B) est destiné à venir d'une autre position que celle de travail dans la position de travail sous l'effet du poids de ladite machine agricole.

8. Machine agricole selon l'une quelconque des revendications 4 à 7,
***caractérisée en ce que*** ledit dispositif (1, 1B) comporte en sus une structure fixe (21) destinée à être fixée d'une part à ladite structure d'attelage (3) et supportant d'autre part ladite bielle de traction (20) au moyen de ladite première articulation (22).

9. Machine agricole selon l'une quelconque des revendications 1 à 8,
***caractérisée en ce que*** la position la plus éloignée de ladite structure d'attelage (3) dudit deuxième point d'attelage inférieur (8) est limitée au moyen d'une butée.

10. Machine agricole selon l'une quelconque des revendications 1 à 9,
***caractérisée en ce qu*'**elle comporte en sus :
- un mécanisme de coupe (31) lié directement ou indirectement à ladite structure d'attelage (3) et destiné à occuper :
• au moins une position de travail ;
• au moins une position de transport ; et
• au moins une autre position intermédiaire ; ledit dispositif (1, 1B) permettant d'amener ledit mécanisme de coupe (31) d'une position de travail dans une position intermédiaire,
- un deuxième dispositif (34 ; 34A ; 34B) permettant d'amener ledit mécanisme de coupe (31) dans une position de transport ; et
- un troisième dispositif (35 ; 35A ; 35B) destiné à alléger ledit mécanisme de coupe (31) en position de travail.

11. Machine agricole selon la revendication 10, ***caractérisée en ce que*** ledit troisième dispositif (35 ; 35A ; 35B) destiné à alléger ledit mécanisme de coupe (31) comporte un accumulateur d'énergie (45, 45B) lié directement ou indirectement à ladite structure d'attelage (3) et directement ou indirectement audit mécanisme de coupe (31).

12. Machine agricole selon la revendication 10 ou 11, ***caractérisée en ce qu'***elle comporte une poutre porteuse (32) liée d'une part audit mécanisme de coupe (31) au moyen d'une quatrième articulation (37) et d'autre part directement ou indirectement à ladite structure d'attelage (3) au moyen d'une cinquième articulation (38) et d'une sixième articulation (39).

13. Machine agricole selon les revendications 11 et 12, ***caractérisée en ce que*** ledit accumulateur d'énergie (45, 45B) comporte un vérin (46, 46B) et un accumulateur de pression (47), ledit vérin (46, 46B) étant lié d'une part directement ou indirectement à ladite structure d'attelage (3) et d'autre part à ladite poutre porteuse (32) au moyen d'une septième articulation (48).

14. Machine agricole selon l'une quelconque des revendications 10 à 13,
***caractérisée en ce que*** ledit dispositif (1 ; 1B), permettant d'amener ledit mécanisme de coupe (31) d'une position de travail dans une position intermédiaire ou inversement, est combiné avec ledit troisième dispositif (35, 35A, 35B) destiné à alléger ledit mécanisme de coupe (31) en position de travail.

15. Machine agricole selon la revendication 14, ***caractérisée en ce que*** ledit dispositif (1, 1B) permettant d'amener ledit mécanisme de coupe (31) d'une position de travail dans une position intermédiaire ou inversement commande ledit troisième dispositif (35, 35A, 35B) destiné à alléger ledit mécanisme de coupe (31).

16. Machine agricole selon la revendication 13, ***caractérisée en ce que*** le vérin de manoeuvre (24) dudit dispositif (1) est en communication avec le vérin (46) de l'accumulateur d'énergie (45) dudit troisième dispositif (35, 35A).

17. Machine agricole selon la revendication 16, ***caractérisée en ce que*** le vérin de manoeuvre (24) dudit dispositif (1) comporte deux chambres (58, 59), la première chambre (58) étant destinée à communiquer avec une centrale hydraulique (57) dudit véhicule moteur (5) et la deuxième chambre (59) étant en communication avec la chambre unique (61) dudit vérin (46) de l'accumulateur d'énergie (45).

18. Machine agricole selon la revendication 17, ***caractérisée en ce* qu'**il est prévu un premier robinet (60, 85) destiné à autoriser ou interdire la communication entre la centrale hydraulique (57) dudit véhicule moteur (5) et la première chambre (58) dudit vérin de manoeuvre (24).

19. Machine agricole selon la revendication 17 ou 18, ***caractérisée en ce* qu'**il est prévu un deuxième robinet (64, 85) destiné à autoriser ou interdire la communication entre la centrale hydraulique (57) dudit véhicule moteur (5) avec la deuxième chambre (59) dudit vérin de manoeuvre (24), l'accumulateur de pression (47) et la chambre unique (61) dudit vérin (46) de l'accumulateur d'énergie (45).

20. Machine agricole selon l'une quelconque des revendications 17 à 19,
***caractérisée en ce* qu'**il est prévu un moyen (68) autorisant uniquement le passage du fluide vers la première chambre (58) dudit vérin de manoeuvre (24, 24B) et limitant le débit du fluide entre ladite première chambre (58) et la centrale hydraulique (57) dudit véhicule moteur (5).

21. Machine agricole selon la revendication 12 et l'une quelconque des revendications 10 à 20, ***caractérisée en ce que*** ledit deuxième dispositif (34, 34A, 34B) permettant d'amener ledit mécanisme de coupe (31) dans une position de transport comporte un autre vérin (53) permettant de pivoter ledit mécanisme de coupe (31) d'une position intermédiaire dans une position de transport ou inversement autour de ladite sixième articulation (39).

22. Machine agricole selon les revendications 17 et 21, ***caractérisée en ce que*** ledit autre vérin (53) dudit deuxième dispositif (34, 34A, 34B) comporte :
- une première chambre (72) destinée à communiquer avec la centrale hydraulique (57) dudit véhicule moteur (5) ; et
- une deuxième chambre (73) destinée à communiquer avec la centrale hydraulique (57) dudit véhicule moteur (5) par l'intermédiaire d'un troisième robinet (75, 85).

23. Machine agricole selon la revendication 22, ***caractérisée en ce que*** ledit troisième robinet (75) comporte ou est combiné avec un deuxième moyen (79) permettant dans une position dudit troisième robinet (75) uniquement le passage du fluide vers la deuxième chambre (73) dudit autre vérin (53) et en interdit la sortie.

24. Machine agricole selon la revendication 13 et l'une quelconque des revendications 10 à 14, ***caractérisée en ce que*** ledit troisième dispositif (35B) destiné à alléger ledit mécanisme de coupe (31) comporte un vérin supplémentaire (86) lié d'une part directement ou indirectement à ladite structure d'attelage (3) et d'autre part audit vérin (46B) de l'accumulateur d'énergie (45B).

25. Machine agricole selon les revendications 13 et 24, ***caractérisée en ce que*** ledit vérin supplémentaire (86) et ledit vérin (46B) de l'accumulateur d'énergie (45B) comporte une tige de vérin commune (87) et que le corps (88) dudit vérin supplémentaire (86) est lié directement ou indirectement à ladite structure d'attelage (3).

26. Machine agricole selon la revendication 17 et la revendication 24 ou 25,
***caractérisée en ce que*** ledit vérin supplémentaire (86) comporte une autre chambre unique (89) destinée à communiquer avec la centrale hydraulique (57) dudit véhicule moteur (5) et la première chambre (58) dudit vérin de manoeuvre (24B).

27. Machine agricole selon les revendications 17, 22 et 26, ***caractérisée en ce que*** la première et la deuxième chambres (58, 58B, 59) dudit vérin de manoeuvre (24, 24B), la chambre unique (61) dudit vérin (46, 46B) de l'accumulateur d'énergie (45, 45B), la première et la deuxième chambres (72, 73) dudit autre vérin (53) du deuxième dispositif (34, 34A, 34B) et le cas échéant la chambre (89) dudit vérin supplémentaire (86) sont agencées entre elles de manière à former un réseau destiné à communiquer avec la centrale hydraulique (57) dudit véhicule moteur (5) au moyen d'une alimentation unique.

## Patentansprüche

1. Landmaschine, die
- eine Kupplungskonstruktion (3), die an einer Kupplungsvorrichtung (4) eines Motorfahrzeugs (5) angehängt werden soll und mit einem oberen Kupplungspunkt (9) und mindestens einem unteren Kupplungspunkt (7) versehen ist; und
- eine Vorrichtung (1, 1B), die es gestattet, die Landmaschine aus einer Arbeitsstellung, in der die Landmaschine zumindest teilweise auf dem Boden (S) aufliegt, in eine andere Stellung, in der sich die Landmaschine über den Boden (S) erstreckt, oder umgekehrt, zu bringen, wobei ein zweiter unterer Kupplungspunkt (8) vorgesehen ist, der mit der Vorrichtung (1, 1B) verbunden ist,
umfasst, ***dadurch gekennzeichnet,* dass** die Vorrichtung (1, 1B) ein Betätigungselement (18) aufweist, das mit einem Betätigungszylinder (24, 24B) versehen ist, der die Kupplungskonstruktion (3) bezüglich des zweiten unteren Kupplungspunkts (8) in die Arbeitsstellung oder in die andere Stellung bewegen soll.

2. Landmaschine nach Anspruch 1, ***dadurch gekennzeichnet,* dass** das Betätigungselement (18) direkt oder indirekt mit der Kupplungskonstruktion (3) und direkt oder indirekt mit dem zweiten unteren Kupplungspunkt (8) verbunden ist.

3. Landmaschine nach Anspruch 1 oder 2, ***dadurch gekennzeichnet,* dass** die Vorrichtung (1, 1B) des Weiteren ein Halteelement (19) aufweist, das es dem Motorfahrzeug (5) gestattet, die Landmaschine im Betrieb zu ziehen oder zu schieben.

4. Landmaschine nach Anspruch 3, ***dadurch gekennzeichnet,* dass** das Halteelement (19) eine Zugstange (20) ist, die einerseits mittels eines ersten Gelenks (22) mit einer zumindest im Wesentlichen horizontalen und quer zur Fahrtrichtung (17) verlaufenden Längsachse (22a) direkt oder indirekt mit der Kupplungskonstruktion (3) verbunden ist.

5. Landmaschine nach Anspruch 4, ***dadurch gekennzeichnet,* dass** der zweite untere Kupplungspunkt (8) mit der Zugstange (20) verbunden ist.

6. Landmaschine nach Anspruch 4 oder 5, ***dadurch gekennzeichnet,* dass** der Betätigungszylinder (24, 24B) einerseits mittels eines zweiten Gelenks (25) mit der Kupplungskonstruktion (3) und andererseits mittels eines dritten Gelenks (26) mit der Zugstange (20) verbunden ist.

7. Landmaschine nach irgend einem der Ansprüche 1 bis 6, ***dadurch gekennzeichnet,* dass** die Vorrichtung (1, 1B) unter der Wirkung des Gewichts der Landmaschine aus einer anderen Stellung als die Arbeitsstellung in die Arbeitsstellung gelangen soll.

8. Landmaschine nach irgend einem der Ansprüche 4 bis 7, ***dadurch gekennzeichnet,* dass** die Vorrichtung (1, 1B) des Weiteren eine feststehende Konstruktion (21) aufweist, die einerseits an der Kupplungskonstruktion (3) befestigt werden und andererseits mittels des ersten Gelenks (22) die Zugstange (20) stützen soll.

9. Landmaschine nach irgend einem der Ansprüche 1 bis 8, ***dadurch gekennzeichnet*, dass** die am weitesten von der Kupplungskonstruktion (3) weg liegende Position des zweiten unteren Kupplungspunkts (8) mittels eines Anschlags begrenzt wird.

10. Landmaschine nach irgend einem der Ansprüche 1 bis 9, ***dadurch gekennzeichnet,* dass** sie des Weiteren
- einen direkt oder indirekt mit der Kupplungskonstruktion (3) verbundenen Schneidmechanismus (31), der folgende Stellungen einnehmen soll:
• mindestens eine Arbeitsstellung;
• mindestens eine Transportstellung; und
• mindestens eine andere Zwischenstellung;
wobei es die Vorrichtung (1, 1B) gestattet, den Schneidmechanismus (31) aus einer Arbeitsstellung in eine Zwischenstellung zu bringen,
- eine zweite Vorrichtung (34; 34A; 34B), die es gestattet, den Schneidmechanismus (31) in eine Transportstellung zu bringen; und
- eine dritte Vorrichtung (35; 35A; 35B), die den Schneidmechanismus (31) in Arbeitsstellung entlasten soll, umfasst.

11. Landmaschine nach Anspruch 10, ***dadurch gekennzeichnet,* dass** die dritte Vorrichtung (35; 35A; 35B), die den Schneidmechanismus (31) entlasten soll, einen Energiespeicher (45, 45B) aufweist, der direkt oder indirekt mit der Kupplungskonstruktion (3) und direkt oder indirekt mit dem Schneidmechanismus (31) verbunden ist.

12. Landmaschine nach Anspruch 10 oder 11, ***dadurch gekennzeichnet,* dass** sie einen Stützträger (32) aufweist, der einerseits mittels eines vierten Gelenks (37) mit dem Schneidmechanismus (31) und andererseits mittels eines fünften Gelenks (38) und eines sechsten Gelenks (39) direkt oder indirekt mit der Kupplungskonstruktion (3) verbunden ist.

13. Landmaschine nach den Ansprüche 11 und 12, ***dadurch gekennzeichnet,* dass** der Energiespeicher (45, 45B) einen Zylinder (46, 46B) und einen Druckspeicher (47) aufweist, wobei der Zylinder (46, 46B) einerseits direkt oder indirekt mit der Kupplungskonstruktion (3) und andererseits mittels eines siebten Gelenks (48) mit dem Stützträger (32) verbunden ist.

14. Landmaschine nach irgend einem der Ansprüche 10 bis 13, ***dadurch gekennzeichnet,* dass** die Vorrichtung (1, 1B), die es gestattet, den Schneidmechanismus (31) aus einer Arbeitsstellung in eine Zwischenstellung, oder umgekehrt, zu bringen, mit der dritten Vorrichtung (35, 35A, 35B), die den Schneidmechanismus (31) in Arbeitsstellung entlasten soll, kombiniert ist.

15. Landmaschine nach Anspruch 14, ***dadurch gekennzeichnet,* dass** die Vorrichtung (1, 1B), die es gestattet, den Schneidmechanismus (31) aus einer Arbeitsstellung in eine Zwischenstellung, oder umgekehrt, zu bringen, die dritte Vorrichtung (35, 35A, 35B) bedient, die den Schneidmechanismus (31) entlasten soll.

16. Landmaschine nach Anspruch 13, ***dadurch gekennzeichnet,* dass** der Betätigungszylinder (24) der Vorrichtung (1) mit dem Zylinder (46) des Energiespeichers (45) der dritten Vorrichtung (35, 35A) in Verbindung steht.

17. Landmaschine nach Anspruch 16, ***dadurch gekennzeichnet,* dass** der Betätigungszylinder (24) der Vorrichtung (1) zwei Kammern (58, 59) aufweist, wobei die erste Kammer (58) mit einer Hydraulikeinheit (57) des Motorfahrzeugs (5) verbunden werden soll und die zweite Kammer (59) mit der einzigen Kammer (61) des Zylinders (46) des Energiespeichers (45) in Verbindung steht.

18. Landmaschine nach Anspruch 17, ***dadurch gekennzeichnet,* dass** ein erstes Ventil (60, 85) vorgesehen ist, das die Verbindung zwischen der Hydraulikeinheit (57) des Motorfahrzeugs (5) und der ersten Kammer (58) des Betätigungszylinders (24) gestatten oder sperren soll.

19. Landmaschine nach Anspruch 17 oder 18, ***dadurch gekennzeichnet,* dass** ein zweites Ventil (64, 85) vorgesehen ist, das die Verbindung zwischen der Hydraulikeinheit (57) des Motorfahrzeugs (5) mit der zweiten Kammer (59) des Betätigungszylinders (24), dem Druckspeicher (47) und der einzigen Kammer (61) des Zylinders (46) des Energiespeichers (45) gestatten oder sperren soll.

20. Landmaschine nach irgend einem der Ansprüche 17 bis 19, ***dadurch gekennzeichnet,* dass** ein Mittel (68) vorgesehen ist, das nur den Durchgang des Fluids zur ersten Kammer (58) des Betätigungszylinders (24, 24B) gestattet und den Durchfluss des Fluids zwischen der ersten Kammer (58) und der Hydraulikeinheit (57) des Motorfahrzeugs (5) begrenzt.

21. Landmaschine nach Anspruch 12, und irgend einem der Ansprüche 10 bis *20,* ***dadurch gekennzeichnet*, dass** die zweite Vorrichtung (34, 34A, 34B), die es gestattet, den Schneidmechanismus (31) in eine Transportstellung zu bringen, einen anderen Zylinder (53) aufweist, der es gestattet, den Schneidmechanismus (31) um das sechste Gelenk (39) aus einer Zwischenstellung in eine Transportstellung, oder umgekehrt, zu schwenken.

22. Landmaschine nach den Ansprüche 17 und 21, ***dadurch gekennzeichnet,* dass** der andere Zylinder (53) der zweiten Vorrichtung (34, 34A, 34B)
- eine erste Kammer (72), die mit der Hydraulikeinheit (57) des Motorfahrzeugs (5) in Verbindung stehen soll; und
- eine zweite Kammer (73), die mittels eines dritten Ventils (75, 85) mit der Hydraulikeinheit (57) des Motorfahrzeugs (5) in Verbindung stehen soll, umfasst.

23. Landmaschine nach Anspruch 22, ***dadurch gekennzeichnet,* dass** das dritte Ventil (75) ein zweites Mittel (79) aufweist oder damit kombiniert ist, das in einer Stellung des dritten Ventils (75) nur den Durchgang des Fluids zur zweiten Kammer (73) des anderen Zylinders gestattet und seinen Austritt sperrt.

24. Landmaschine nach Anspruch 13 und irgend einem der Ansprüche 10 bis 14, ***dadurch gekennzeichnet,* dass** die dritte Vorrichtung (35B), die den Schneidmechanismus (31) entlasten soll, einen zusätzlichen Zylinder (86) aufweist, der einerseits direkt oder indirekt mit der Kupplungskonstruktion (3) und andererseits mit dem Zylinder (46B) des Energiespeichers verbunden ist.

25. Landmaschine nach den Ansprüche 13 und 24, ***dadurch gekennzeichnet,* dass** der zusätzliche Zylinder (86) und der Zylinder (46B) des Energiespeichers (45B) eine gemeinsame Zylinderstange (87) aufweisen und dass der Körper (88) des zusätzlichen Zylinders (86) direkt oder indirekt mit der Kupplungskonstruktion (3) verbunden ist.

26. Landmaschine nach Anspruch 17 und Anspruch 24 oder 25, ***dadurch gekennzeichnet,* dass** der zusätzliche Zylinder (86) eine andere einzige Kammer (89) aufweist, die mit der Hydraulikeinheit (57) des Motorfahrzeugs (5) und der ersten Kammer (58) des Betätigungszylinders (24B) verbunden werden soll.

27. Landmaschine nach den Ansprüche 17, 22 und 26, ***dadurch gekennzeichnet,* dass** die erste und die zweite Kammer (58, 58B, 59) des Betätigungszylinders (24, 24B), die einzige Kammer (61) des Zylinders (46, 46B) des Energiespeichers (45, 45B), die erste und die zweite Kammer (72, 73) des anderen Zylinders (53) der zweiten Vorrichtung (34, 34A, 34B) und gegebenenfalls die Kammer (89) des zusätzlichen Zylinders (86) bezüglich einander so angeordnet sind, dass sie ein Netz bilden, das mittels einer einzigen Versorgung mit der Hydraulikeinheit (57) des Motorfahrzeugs (5) verbunden werden soll.

## Claims

1. Agricultural machine comprising:
- a hitching structure (3) intended to be hitched to a hitching device (4) of a motor vehicle (5) and comprising an upper hitching point (9) and at least one lower hitching point (7); and
- a device (1; 1B) allowing said agricultural machine to be brought from a work position in which said agricultural machine rests at least partially on the ground (S), into another position in which said agricultural machine extends above the ground (S) or vice versa, there is provided a second lower hitching point (8) connected to said device (1, 1B),
***characterized in* that** said device (1, 1B) comprises an operating element (18) equipped with an operating ram (24, 24B) intended to move said hitching structure (3) with respect to said second lower hitching point (8) into the work position or into the other position.

2. Agricultural machine according to Claim 1, ***characterized in* that** said operating element (18) is connected directly or indirectly to said hitching structure (3) and is connected directly or indirectly to said second lower hitching point (8).

3. Agricultural machine according to Claim 1 or 2, ***characterized in* that** said device (1, 1B) additionally comprises a holding element (19) allowing said motor vehicle (5) to pull or to push said agricultural machine during work.

4. Agricultural machine according to Claim 3, ***characterized in* that** said holding element (19) is a draft rod (20) connected on the one hand directly or indirectly to said hitching structure (3) by means of a first articulation (22) the longitudinal axis (22a) of which is at least approximately horizontal and transversal to a direction of forward travel (17).

5. Agricultural machine according to Claim 4, ***characterized in* that** said second lower hitching point (8) is connected to said draft rod (20).

6. Agricultural machine according to Claim 4 or 5, ***characterized in* that** said operating ram (24, 24B) is connected on the one hand to said hitching structure (3) by means of a second articulation (25) and on the other hand to said draft rod (20) by means of a third articulation (26).

7. Agricultural machine according to any one of Claims 1 to 6, ***characterized in* that** said device (1, 1B) is intended to come from a position other than the work position into the work position under the effect of the weight of said agricultural machine.

8. Agricultural machine according to any one of Claims 4 to 7, ***characterized in* that** said device (1,1B) additionally comprises a fixed structure (21) intended to be fixed, on the one hand, to said hitching structure (3) and on the other hand supporting said draft rod (20) by means of said first articulation (22).

9. Agricultural machine according to any one of Claims 1 to 8, ***characterized in* that** the position of said hitching structure (3) furthest from said second lower hitching point (8) is limited by means of a stop.

10. Agricultural machine according to any one of Claims 1 to 9, ***characterized* in that** it additionally comprises:
- a cutting mechanism (31) connected directly or indirectly to said hitching structure (3) and intended to occupy:
• at least one work position;
• at least one transport position; and
• at least one other intermediate position;
said device (1, 1B) allowing said cutting mechanism (31) to be brought from a work position into an intermediate position;
- a second device (34; 34A; 34B) allowing said cutting mechanism (31) to be brought into a transport position; and
- a third device (35; 35A; 35B) intended to lighten said cutting mechanism (31) in the work position.

11. Agricultural machine according to Claim 10, ***characterized in* that** said third device (35; 35A; 35B) intended to lighten said cutting mechanism (31) comprises an energy accumulator (45, 45B) connected directly or indirectly to said hitching structure (3) and connected directly or indirectly to said cutting mechanism (31).

12. Agricultural machine according to Claim 10 or 11, ***characterized in* that** it comprises a carrying beam (32) connected on the one hand to said cutting mechanism (31) by means of a fourth articulation (37) and on the other hand directly or indirectly to said hitching structure (3) by means of a fifth articulation (38) and of a sixth articulation (39).

13. Agricultural machine according to Claims 11 and 12, ***characterized in* that** said energy accumulator (45, 45B) comprises a ram (46, 46B) and a pressure accumulator (47), said ram (46, 46B) being connected on the one hand directly or indirectly to said hitching structure (3) and on the other hand being connected to said carrying beam (32) by means of a seventh articulation (48).

14. Agricultural machine according to any one of Claims 10 to 13, ***characterized in* that** said device (1; 1B) allowing said cutting mechanism (31) to be brought from a work position into an intermediate position or vice versa, is combined with said third device (35, 35A, 35B) intended to lighten said cutting mechanism (31) in the work position.

15. Agricultural machine according to Claim 14, ***characterized in* that** said device (1, 1B) allowing said cutting mechanism (31) to be brought from a work position into an intermediate position or vice versa controls said third device (35, 35A, 35B) intended to lighten said cutting mechanism (31).

16. Agricultural machine according to Claim 13, ***characterized in* that** the operating ram (24) of said device (1) is in communication with the ram (46) of the energy accumulator (45) of said third device (35, 35A).

17. Agricultural machine according to Claim 16, ***characterized in* that** the operating ram (24) of said device (1) comprises two chambers (58, 59), the first chamber (58) being intended to communicate with a hydraulic unit (57) of said motor vehicle (5) and the second chamber (59) being in communication with the single chamber (61) of said ram (46) of the energy accumulator (45).

18. Agricultural machine according to Claim 17, ***characterized in* that** there is provided a first valve (60, 85) intended to allow or to forbid communication between the hydraulic unit (57) of said motor vehicle (5) and the first chamber (58) of said operating ram (24).

19. Agricultural machine according to Claim 17 or 18, ***characterized in* that** there is provided a second valve (64, 85) intended to allow or to forbid communication between the hydraulic unit (57) of said motor vehicle (5) and the second chamber (59) of said operating ram (24), the pressure accumulator (47) and the single chamber (61) of said ram (46) of the energy accumulator (45).

20. Agricultural machine according to any one of Claims 17 to 19, ***characterized in* that** there is provided a means (68) allowing fluid to pass only toward the first chamber (58) of said operating ram (24, 24B) and limiting the flow rate of the fluid between said first chamber (58) and the hydraulic unit (57) of said motor vehicle (5).

21. Agricultural machine according to Claim 12 and any one of Claims 10 to 20,
***characterized in* that** said second device (34, 34A, 34B) allowing said cutting mechanism (31) to be brought into a transport position comprises another ram (53) allowing said cutting mechanism (31) to pivot from an intermediate position into a transport position or vice versa about said sixth articulation (39).

22. Agricultural machine according to Claims 17 and 21, ***characterized in* that** said other ram (53) of said second device (34, 34A, 34B) comprises:
- a first chamber (72) intended to communicate with the hydraulic unit (57) of said motor vehicle (5); and
- a second chamber (73) intended to communicate with the hydraulic unit (57) of said motor vehicle (5) via a third valve (75, 85).

23. Agricultural machine according to Claim 22, ***characterized in* that** said third valve (75) comprises or is combined with a second means (79) which, in one position of said third valve (75), allows fluid to pass only toward the second chamber (73) of said other ram (53) and prevents outlet therefrom.

24. Agricultural machine according to Claim 13 and any one of Claims 10 to 14,
***characterized in* that** said third device (35B) intended to lighten said cutting mechanism (31) comprises an additional ram (86) connected on the one hand directly or indirectly to said hitching structure (3) and on the other hand to said ram (46B) of the energy accumulator (45B).

25. Agricultural machine according to Claims 13 and 24, ***characterized in* that** said additional ram (86) and said ram (46B) of the energy accumulator (45B) comprise a common ram rod (87) and **in that** the body (88) of said additional ram (86) is connected directly or indirectly to said hitching structure (3).

26. Agricultural machine according to Claim 17 and Claim 24 or 25,
***characterized in* that** said additional ram (86) comprises another single chamber (89) intended to communicate with the hydraulic unit (57) of said motor vehicle (5) and the first chamber (58) of said operating ram (24B).

27. Agricultural machine according to Claims 17, 22 and 26, ***characterized in* that** the first and second chambers (58, 58B, 59) of said operating ram (24, 24B), the single chamber (61) of said ram (46, 46B) of the energy accumulator (45, 45B), the first and second chambers (72, 73) of said other ram (53) of the second device (34, 34A, 34B) and, as appropriate, the chamber (89) of said additional ram (86) are arranged relative to one another in such a way as to form a system intended to communicate with the hydraulic unit (57) of said motor vehicle (5) by means of a single supply.
